(19) Europäisches Patentamt
European Patent Office
Office européen des brevets

(11) **EP 2 639 955 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(51) Internationale Patentklassifikation (IPC):
**H02M 7/48** (2007.01)    **H02M 7/5387** (2007.01)
**H02J 3/00** (2006.01)

(21) Anmeldenummer: **12187143.8**

(52) Gemeinsame Patentklassifikation (CPC):
**H02M 7/5387; H02M 7/53876;** Y02P 80/20

(22) Anmeldetag: **04.10.2012**

(54) **Verfahren zum Regeln eines selbstgeführten Stromrichters, und selbstgeführter Stromrichter**

Method for regulating a self-commutated power converter, and self-commutated power converter

Procédé de réglage d'un convertisseur de courant à commutation autonome, et onvertisseur de courant à commutation autonome

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2011 DE 102011121362**

(43) Veröffentlichungstag der Anmeldung:
**18.09.2013 Patentblatt 2013/38**

(73) Patentinhaber: **RWE Deutschland AG 45128 Essen (DE)**

(72) Erfinder:
• **BARTELS, Wolfgang, Dipl.-Ing. 58453 Witten (DE)**
• **HEISING, Carsten, Dr.-Ing. 44225 Dortmund (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**WO-A1-91/11847    US-A- 4 547 726**

• **YANG XIANG-ZHEN ET AL: "Control strategy for virtual synchronous generator in microgrid", ELECTRIC UTILITY DEREGULATION AND RESTRUCTURING AND POWER TECHNOLOGIES (DRPT), 2011 4TH INTERNATIONAL CONFERENCE ON, IEEE, 6 July 2011 (2011-07-06), pages 1633 - 1637, XP032039390, ISBN: 978-1-4577-0364-5, DOI: 10.1109/DRPT.2011.5994159**

# EP 2 639 955 B1

**Beschreibung**

Die Erfindung betrifft ein Verfahren zum Regeln eines selbstgeführten dreiphasigen Stromrichters, wobei zumindest ein aktueller zeitabhängiger elektrischer Parameter einer Strecke bereitgestellt wird. Die Erfindung betrifft darüber hinaus einen selbstgeführten Stromrichter und ein System umfassend mindestens einen selbstgeführten dreiphasigen Stromrichter.

Regelverfahren für selbstgeführte dreiphasige Stromrichter sind bekannt aus EP1691463A1, aus

YANG XIANG-ZHEN ET AL: "Control strategy for virtual synchronous generator in microgrid",ELECTRIC UTILITY DEREGULATION AND RESTRUCTURING AND POWER TECHNOLOGIES (DRPT), 2011 4TH INTERNATIONAL CONFERENCE ON, IEEE, 6. Juli 2011 (2011-07-06), Seiten 1633-1637, XP032039390, DOI: 10.1109/DRPT.2011.5994159, aus JOSE A RESTREPO ET AL: "Optimum Space Vector Computation Technique for Direct Power Control",IEEE TRANSACTIONS ON POWER ELECTRONICS, INSTITUTE OF ELECTRICAL AND ELECTRONICS ENGINEERS, USA, Bd. 24, Nr. 6, 1. Juni 2009 (2009-06-01), Seiten 1637-1645, XP011262263.

Weiterhin offenbart die WO 91/11847 A1 die Ableitung der Netzfrequenz aus einer Spannungsmessung, also die Ermittlung eines aktuellen Zeitparameters einer Strecke aus einem aktuellen elektrischen Parameter einer Regelstrecke.

In der heutigen Zeit werden konventionelle Energieerzeugungsanlagen, wie Kohlekraftwerke, Gaskraftwerke oder Kernkraftwerke, vermehrt durch regenerative Energieerzeugungsanlagen substituiert. Beispielhafte regenerative Energieerzeugungsanlagen sind Windkraftanlagen, Photovoltaikanlagen, Wasserkraftanlagen und Biomasseanlagen. Schätzungen gehen davon aus, dass bis Ende des Jahres 2020 regenerative Energieerzeugungsanlagen mit einer installierten Leistung von ca. 100.000 MW an deutsche Stromnetze angeschlossen sein werden.

Durch einen höheren Anteil an regenerativen Energieerzeugungsanlagen und die damit verbundene Verdrängung konventioneller Kraftwerke ergeben sich jedoch Probleme hinsichtlich der Netzstabilität. Grund hierfür ist die netzstabilisierende Funktionsweise der immer weiter verdrängten konventionellen Kraftwerke und die auf diese Funktionsweise abgestimmten Netze und Verbraucher sowie die fehlenden netzstabilisierenden Fähigkeiten der regenerativen Erzeugungsanlagen.

Die Funktionsweise eines konventionellen Kraftwerks beruht auf einem dreiphasigen Drehspannungsnetz. Das Verhalten eines Drehspannungsnetzes kann beschrieben werden, indem von einer Spannungsquelle mit einer symmetrischen, gleichen Quellenimpedanz ausgegangen wird. Hierbei sind die Beträge der Quellenspannungen gleich groß und zwischen den Quellenspannungen wird ein Winkel von 120° beibehalten. Konventionelle Energieerzeugungsanlagen sind dazu konfiguriert, Ströme im Mitsystem und im Gegensystem zu liefern. Durch dieses Wirkungsprinzip stellen die konventionellen Kraftwerke durch die Bereitstellung ihres symmetrischen Drehspannungssystems elektrische Energie zur Verfügung, bei der die eingespeisten Ströme der Spannungssymmetrie entgegengewirkt. In Abhängigkeit von Last- und Netzzustandsänderungen ändern sich zeitnah, insbesondere augenblicklich, auch Betrag und Winkel der Quellenspannung, so dass eine Stabilisierung des Netzes erfolgt. Mit anderen Worten wird das Netz durch die konventionellen Energieerzeugungsanlagen selbst ausreichend stabilisiert.

Im Gegensatz zu konventionellen Energieerzeugungsanlagen werden regenerative Energieerzeugungsanlagen vermehrt nicht nach dem Wirkungsprinzip des Drehspannungssystems, sondern nach dem Wirkungsprinzip des Drehstromsystems betrieben. Ein entsprechendes Drehstromsystem zeichnet sich dadurch aus, dass die in den Energieerzeugungsanlagen erzeugte Energie über Stromrichter, insbesondere Vollumrichter, gewandelt wird. Die gewandelte Energie kann dann ins Netz eingespeist werden. Mit anderen Worten prägen die Stromrichter einen Strom in das Netz ein.

Hierbei können insbesondere selbstgeführte Stromrichter eingesetzt werden, welche die für ihre Regelung erforderlichen Eingangsgrößen messtechnisch dem Netz entnehmen können, in welches der Strom eingespeist werden soll. Je höher der Anteil an Stromrichtern in einem Netzabschnitt ist, je geringer ist auch die in diesem Netzabschnitt zur Verfügung stehende Kurzschlussleistung bezogen auf die einzelnen Erzeugungseinheiten.

Die derzeit eingesetzten Verfahren zur Regelung von Stromrichtern umfassen in der Regel filternd wirkende Drehtransformationen, insbesondere dq-basierte Ansätze, bei denen dreiphasige Größen mit den Achsen U,V,W in ein zweiachsiges Koordinatensystem mit den Achsen d und q überführt werden können. Derartige Ansätze erlauben jedoch nur eine relativ langsame Regelung eines Stromrichters und somit im Kontext der deutlich erhöhten Anforderungen moderner Netzstrukturen keine ausreichende Netzstabilisierung. Dies führt schon heutzutage in von Stromrichtern dominierten Netzabschnitten zu Problemen, welche nur einen eingeschränkten Betrieb der entsprechenden regenerativen Energieerzeugungsanlagen erlauben. Dieses Problem wird sich aufgrund des steigenden Anteils an regenerativen Energieerzeugungsanlagen deutlich verstärken. In Zukunft werden Stromnetze daher nicht mehr wie bisher üblich betreibbar sein, da der Anteil der netzstabilisierenden konventionellen Energieerzeugungsanlagen zu gering sein wird. Insbesondere leistungsintensive Industrieanlagen werden künftig aus dem öffentlichen Netz heraus nicht mehr mit ausreichender Kurzschlussleistung versorgt werden können. In jedem Fall sind die Möglichkeiten der Netzstabilisierung durch konventionelle Energieerzeugungsanlagen - vor allem im Kontext der Reaktionsgeschwindigkeit - nicht ausreichend, um zukünftig einen sicheren Netzbetrieb zu gewährleisten. Diesbezüglich haben sie sogar eher noch eine Destabilisierung des Netzes zur Folge.

Um eine ausreichende Netzstabilität auch in der Zukunft zu gewährleisten, sind daher Verfahren erforderlich, die eine schnellere Regelung von Stromrichtern ermöglichen. Bei einer aus dem Stand der Technik bekannten zeitnahen Regelung kann zunächst ein elektrischer Parameter der Strecke, insbesondere die aktuelle Spannung und/oder der aktuelle Strom der Strecke, bestimmt werden. Die Strecke kann die Last und/oder das Netz umfassen.

Gemäß diesem Verfahren kann die bestimmte zeitabhängige Spannung mittels einer Netzanalyse in ein frequenzabhängiges Spannungssignal gewandelt werden. Das frequenzabhängige Spannungssignal kann aus dem zeitabhängigen Spannungssignal beispielsweise mittels einer Diskreten Fourier Transformation (DFT) und/oder einem Phase-Locked-Loop (PLL) Algorithmus ermittelt werden. Gemäß dem Stand der Technik werden hierbei insbesondere die Frequenz, die Phasenlage und die Amplitude der Grundschwingung bestimmt.

Darüber hinaus kann eine gewünschte Anlagencharakteristik, die am Anschlusstor des Stromrichters realisiert werden soll, vorgegeben werden. Aus dem frequenzabhängigen Spannungssignal und der vorgebbaren Anlagencharakteristik kann dann ein frequenzabhängiger Sollstrom, insbesondere der zu realisierende Netzstrom, erzeugt werden. Ferner kann eine Fehlerkorrektur durchgeführt werden.

Aus den gefilterten langsamen Zeigergrößen, insbesondere des frequenzabhängigen Sollstroms, können beispielsweise durch eine Vorsteuerung und ein Führungsgrößenmodel (augenblickliche) zeitabhängige Stellsignale erzeugt werden. Beispielsweise kann durch eine Vorsteuerung auf Basis eines identifizierten oder geschätzten Models der Strecke aus dem frequenzabhängigen Sollstrom eine zeitabhängige Stellspannung bestimmt werden, welche einem Pulsgenerator zur Steuerung eines Pulswechselrichters, also dem Stromrichter, zugeführt werden kann.

Nachteilig an diesem (aus internem Stand der Technik bekannten) Verfahren ist die hohe Komplexität des Verfahrens. Zeitabhängige elektrische Parameter werden zunächst in den Frequenzbereich durch filternde Elemente transformiert. Im Frequenzbereich wird das elektrische Signal weiterverarbeitet. Anschließend wird in Abhängigkeit des frequenzabhängigen Signals ein geeignetes zeitabhängiges Stellsignal erzeugt. Es sind bei diesem Verfahren insbesondere filternde Elemente ebenso wie ein Stromregler erforderlich.

Es ist daher Aufgabe der vorliegenden Erfindung, ein Verfahren zum Regeln eines dreiphasigen Stromrichters zur Verfügung zu stellen, welches eine zeitnahe, insbesondere augenblickliche Regelung eines Stromrichters in einfacher Weise ermöglicht.

Die zuvor hergeleitete und aufgezeigte Aufgabe wird erfindungsgemäß bei einem Verfahren nach Anspruch 1 zum Regeln eines selbstgeführten dreiphasigen Stromrichters gelöst, wobei zumindest ein aktueller zeitabhängiger elektrischer Parameter einer Strecke bereitgestellt wird. Mindestens ein aktueller Zeitparameter der Strecke wird aus dem aktuellen elektrischen Parameter ermittelt. Mindestens ein vorheriges Zeigerstellsignal wird bereitgestellt, wobei das vorherige Zeigerstellsignal in einem vorherigen Stellintervall bestimmt wurde. Das vorherige Zeigerstellsignal wird um einen Winkel gedreht, wobei der Winkel in Abhängigkeit des ermittelten aktuellen Zeitparameters bestimmt wird. Der Stromrichter wird in Abhängigkeit des gedrehten Zeigerstellsignals geregelt.

Im Gegensatz zum Stand der Technik ist erfindungsgemäß durch die Drehung eines vorherigen Stellsignals um einen Winkel in Abhängigkeit eines aktuellen Zeitsignals eine zeitnahe, insbesondere augenblickliche Regelung eines selbstgeführten Stromrichters in einfacher Weise möglich.

In einem ersten Schritt wird ein aktuell vorliegendes elektrisches Signal bzw. ein aktuell vorliegender elektrischer Parameter der Strecke bestimmt. Bei dem Parameter handelt es sich um einen augenblicklichen, zeitabhängigen Parameter. Gemäß dem in Anspruch 1 definierten erfindungsgemäßen Verfahren wird eine aktuelle Spannung der Strecke bestimmt, insbesondere gemessen. Zusätzlich kann der aktuelle Strom der Strecke erfasst werden. Die Strecke oder auch Regelstrecke kann insbesondere eine Last und ein Netz umfassen.

Aus dem mindestens einen aktuellen zeitabhängigen elektrischen Parameter wird im Gegensatz zum Stand der Technik (lediglich) mindestens ein aktueller Zeitparameter der Strecke abgeleitet. Bei dem mindestens einen aktuellen Zeitparameter kann es sich insbesondere um einen Parameter oder mehrere Parameter handeln, der/die Rückschlüsse auf den aktuellen Phasenwinkel eines elektrischen Signals der Strecke erlaubt. Vorzugsweise kann mit dessen Hilfe bestimmt werden, wo sich der Phasenwinkel 0 aktuell befindet.

In Abhängigkeit des mindestens einen aktuellen Zeitparameters wird gemäß der in Anspruch 1 definierten Erfindung ein vorheriges Zeigerstellsignal um einen Winkel vorgedreht. Unter einem vorherigen Zeigerstellsignal ist ein Stellsignal zu verstehen, welches in einem vorherigen Stellintervall, insbesondere im unmittelbar vorherigen Stellintervall, zum Regeln des Stromrichters verwendet wurde.

Erfindungsgemäß kann hierbei angenommen werden, dass das vorherige Zeigerstellsignal korrekt war. Es ist insbesondere erkannt worden, dass sich ein aktuelles Stellsignal aus dem vorherigen Stellsignal bestimmen lässt, wenn ermittelt wird, um welchen Winkel sich das vorherige Stellsignal vorgedreht hat. Zur Bestimmung des Winkels wird mindestens ein zuvor beschriebener aktueller Zeitparameter ermittelt.

Durch eine Drehung um diesen Winkel kann das vorherige Stellsignal derart gedreht werden, dass das gedrehte Zeigerstellsignal unter der Annahme eines idealen Systems dem aktuell zu realisierenden Zeigerstellsignal entspricht.

Der zu regelnde Stromrichter kann in Abhängigkeit des vorgedrehten Zeigerstellsignals geregelt werden.

Es sei angemerkt, dass es sich gemäß der in Anspruch 1 definierten Erfindung um ein dreiphasiges System handelt. Parameter bzw. Signale können daher bevorzugt durch Raumzeiger dargestellt werden. Insbesondere kann es sich bei einem Zeigersignal um einen augenblicklich definierten bzw. gemessenen Raumzeiger handeln.

Durch das erfindungsgemäße Verfahren kann auf filternde Elemente und auf einen Stromregler verzichtet werden. Eine Transformation in den Frequenzbereich kann entfallen. Bevorzugt kann das Verfahren zum Regeln eines Stromrichters (ausschließlich) im Zeitbereich durchgeführt werden. Insbesondere kann eine ausreichende Netzstabilität auch in Netzbereichen mit einem besonders hohen Anteil an regenerativen Energieerzeugungsanlagen gewährleistet werden. Eine hohe Versorgungssicherheit kann sichergestellt werden.

Gemäß einer ersten Ausführungsform des erfindungsgemäßen Verfahrens kann der mindestens eine aktuelle Zeitparameter eine aktuelle Netzfrequenz der Strecke sein. Alternativ oder zusätzlich kann der mindestens eine aktuelle Zeitparameter eine aktuelle Abtastzeit der Strecke sein. Der bestimmte Winkel zur Drehung des vorherigen Zeigerstellsignals kann im Wesentlichen dem Winkel entsprechen, um den sich das vorherige Zeigerstellsignal vom vorherigen Stellzeitpunkt zum aktuellen Stellzeitpunkt mit der aktuellen Netzfrequenz und/oder der aktuellen Abtastzeit idealer Weise, also in einem idealen Drehnetz, wie einem Drehspannungsnetz, gedreht hat. Es kann angenommen werden, dass es sich um ein ideales System handelt. Insbesondere kann ein vorheriges Zeigerstellsignal, wie ein Spannungsraumzeiger oder ein Stromraumzeiger, um einen Winkel vorgedreht werden, um den sich ein Drehspannungssystem mit der ermittelten aktuellen Netzfrequenz innerhalb der aktuellen Abtastzeit verändert hätte. Eine Fehlerkorrektur kann in nachfolgenden Schritten ebenso erfolgen wie eine Realisierung einer vorgebbaren Analagencharakteristik an dem Anschlusstor eines Stromreglers, wie ein konstanter Widerstand oder eine konstante Leistung.

Wie bereits ausgeführt wurde, wird gemäß der in Anspruch 1 definierten Erfindung als aktueller elektrischer Parameter die aktuelle Spannung der Strecke bestimmt. Zusätzlich, oder als nicht erfindungsgemäße Alternative kann als aktueller elektrischer Parameter der aktuelle Strom der Strecke bestimmt werden. Aus diesen zeitabhängigen Parametern kann in einfacher Weise mindestens ein aktueller Zeitparameter der Strecke, beispielsweise eine Netzfrequenz und/oder eine Abtastzeit, ermittelt werden.

Ferner kann als Zeigerstellsignal ein elektrisches Zeigerstellsignal, bevorzugt ein Spannungszeigerstellsignal, bestimmt werden. Ein Spannungszeigerstellsignal ist besonders zur Regelung eines Stromrichters geeignet. Beispielsweise kann ein Pulsweitenmodulator vorgesehen sein, der das Spannungszeigerstellsignal in ein geeignetes Signal zur Ansteuerung eines Pulswechselrichters umsetzen kann.

Hierbei versteht es sich, dass im Falle eines Spannungszeigerstellsignals als aktueller elektrischer Parameter, wie in der Erfindung gemäß Anspruch 1 definiert, zumindest die aktuelle Spannung der Strecke bestimmt werden kann und daraus entsprechende Zeitparameter zur Bestimmung des Winkels abgeleitet werden können.

Durch eine Regelung eines Stromrichters kann insbesondere eine bestimmte Anlagencharakteristik am Anschlusstor (zu jeder Zeit) realisiert werden. Vorzugsweise kann das Verhalten eines konstanten Widerstands emuliert werden, wenn Energie aus dem Netz bezogen werden soll, und eine konstante Leistung am Anschlusstor realisiert werden, wenn Energie in das Netz eingespeist werden soll. Das Zeigerstellsignal kann in Abhängigkeit einer vorgebbaren Anlagencharakteristik bestimmt werden.

Gemäß dem erfindungsgemäßen Verfahren wird aus dem gedrehten Zeigerstellsignal ein aktuelles Zeigerstellsignal ermittelt. Das aktuelle Zeigerstellsignal kann zumindest in Abhängigkeit des gedrehten Zeigerstellsignals und mindestens einem Sollparameter zur Realisierung einer bestimmten Anlagencharakteristik ermittelt werden. In einfacher Weise kann aus dem gedrehten Zeigerstellsignal und einem oder mehreren Sollwerten eine bestimmte Anlagencharakteristik realisiert werden.

Grundsätzlich können verschiedene Sollparameter zur Realisierung einer bestimmten Anlagencharakteristik vorgegeben werden. Gemäß einer bevorzugten Ausführungsform des Verfahrens der vorliegenden Erfindung kann der mindestens eine Sollparameter eine Sollscheinleistung sein. Ein erstes Sollzeigersignal kann aus dem gedrehten Zeigerstellsignal und der Sollscheinleistung ermittelt werden. Ferner kann aus dem aktuellen Strom der Strecke und mindestens dem ersten Sollzeigersignal durch eine Maximalwertkorrektur ein zweites Sollzeigersignal ermittelt werden. Die Sollscheinleistung, also eine Sollwirkleistung und eine Sollblindleistung, kann vorgeben werden. Diese Sollwerte können sich aus dem Verhalten der Zwischenkreisspannung und der Last ergeben. Mittels der Sollscheinleistung kann in einfacher Weise eine gewünschte Anlagencharakteristik, wie das Verhalten eines konstanten Widerstands am Anschlusstor oder eine konstante Leistung am Anschlusstor, vorgegeben werden.

Es versteht sich, dass weitere Werte, wie eine Nennspannung, ein Nennstrom und dergleichen, zur Realisierung einer bestimmten Anlagencharakteristik berücksichtigt werden können.

Eine entsprechende Berechnung eines Sollwertes kann (ausschließlich) im Zeitbereich durchgeführt werden. Indem der Systemzustand stets augenblicklich als stationär angenommen wird, können die Sollwerte in augenblickliche Sollwerte übertragen werden. In einfacher Weise kann eine vorgebbare Anlagencharakteristik augenblicklich realisiert werden.

Eine optionale Maximalwertkorrektur kann dazu dienen, dass auslegungsspezifische Beschränkungen eingehalten werden können. Zur Maximalwertkorrektur kann insbesondere der augenblickliche Strom, also der aktuelle Strom der Strecke, bereitgestellt, insbesondere gemessen werden. Dieser kann für eine Maximalwertkorrektur bewertet werden.

Vorzugsweise kann das erste Sollzeigersignal ein erstes Stromsollzeigersignal sein. Darüber hinaus kann das zweite Sollzeigersignal ein zweites Stromsollzeigersignal sein. Insbesondere als zweites Stromsollzeigersignal können die Ströme, welche realisiert werden sollen, bestimmt werden. Es versteht sich, dass es sich bei den Sollzeigersignalen um zeitabhängige Signale handeln kann.

Gemäß einer bevorzugten Ausführungsform kann ein vorheriges erstes Sollzeigersignal oder ein vorheriges zweites Sollzeigersignal bereitgestellt werden. Das vorherige erste Sollzeigersignal und/oder das vorherige zweite Sollzeigersignal kann um einen Winkel gedreht werden, wobei der Winkel in Abhängigkeit des ermittelten aktuellen Zeitparameters bestimmt werden kann. Das gedrehte Sollzeigersignal und das erste Sollzeigersignal können summiert werden und/oder das gedrehte Sollzeigersignal und das zweite Sollzeigersignal können summiert werden. Insbesondere kann es sich bei den Sollzeigersignalen um Stromsollzeigersignale handeln. Die Drehung um einen Winkel kann entsprechend der Drehung des Zeigerstellsignals erfolgen.

Vorzugsweise kann von den beiden Sollzeigersignalen das Signal mit dem vorgedrehten Sollzeigersignal summiert werden, welches zuvor rückgekoppelt wurde. Wenn beispielsweise das zweite Sollzeigersignal rückgekoppelt wird, dann kann das zweite Sollzeigersignal mit dem vorgedrehten Sollzeigersignal summiert werden. Bevorzugt wird das zweite Stromsollzeigersignal verwendet. Grund hierfür ist, dass das zweite Stromsollzeigersignal bereits einer Maximalwertkorrektur unterzogen wurde. Insbesondere kann ein negatives vorgedrehtes Stromsollzeigersignal mit dem neuen Stromsollzeigersignal summiert werden. In einfacher Weise kann eine Korrektur des Sollzeigersignals durchgeführt werden.

Wie bereits beschrieben wurde, kann es sich bei einem Sollzeigersignal um ein Stromsollzeigersignal handeln. Insbesondere kann gemäß einer weiteren Ausführungsform das summierte Sollzeigersignal ein Stromsollzeigersignal sein. Aus dem Stromsollzeigersignal kann als aktuelles Zeigerstellsignal ein aktuelles Spannungszeigerstellsignal durch eine differentielle Vorsteuerung ermittelt werden. Falls eine Summierung nicht erfolgt, versteht es sich, dass an Stelle des summierten Stromsollzeigersignals auch das erste oder zweite Stromsollzeigersignal verwendet werden kann. Eine differentielle Vorsteuerung erlaubt in einfacher Weise, ein geeignetes augenblickliches Stellsignal, insbesondere Spannungszeigerstellsignal, zu generieren.

Darüber hinaus kann gemäß einer weiteren Ausführungsform das aktuelle Spannungszeigerstellsignal und das gedrehte Spannungszeigerstellsignal summiert werden. Hierdurch ist in einfacher Weise eine Fehlerkorrektur möglich.

Das resultierende Spannungszeigerstellsignal kann einem Pulsgenerator zur Verfügung gestellt werden. Dieser kann einen Stromrichter entsprechend ansteuern.

Vorzugsweise wird das (gesamte) Regelungsverfahren im Zeitbereich durchgeführt. Insbesondere wird erfindungsgemäß ein algorithmisches Verfahren bereitgestellt.

Ein weiterer Aspekt der vorliegenden Erfindung ist ein selbstgeführter Stromrichter, welcher nach dem zuvor beschriebenen Verfahren geregelt wird, mit einer Regelschaltung zum Bestimmen von mindestens einem aktuellen zeitabhängigen elektrischen Parameter einer Strecke. Die Regelschaltung weist eine Verarbeitungseinrichtung zum Ermitteln von mindestens einem aktuellen Zeitparameter aus dem aktuellen elektrischen Parameter auf, wobei mindestens ein vorheriges Zeigerstellsignal bereitgestellt wird. Das vorherige Zeigerstellsignal ist in einem vorherigen Stellintervall bestimmt worden. Die Regelschaltung weist eine Drehoperatoreinrichtung zum Drehen des vorherigen Zeigerstellsignals um einen Winkel auf, wobei der Winkel in Abhängigkeit des ermittelten aktuellen Zeitparameters bestimmbar ist. Die Regelschaltung ist zum Regeln des Stromrichters in Abhängigkeit des gedrehten Zeigerstellsignals vorgesehen.

Ein noch weiterer Aspekt der Erfindung ist ein System mit einem zuvor beschriebenen selbstgeführten dreiphasigen Stromrichter, wobei der selbstgeführte Stromrichter mit einer Last und einem Netz verbunden ist.

Ein weiterer Aspekt ist eine Energieerzeugungsanlage, insbesondere eine regenerative Energieerzeugungsanlage, umfassend den zuvor beschriebenen selbstgeführten dreiphasigen Stromrichter.

Die zuvor genannten Verfahren können auch als Computerprogramm oder als auf einem Speichermedium gespeichertes Computerprogramm realisiert werden. Hierbei kann erfassungsmittelseitig, aktorseitig und/oder serverseitig ein Mikroprozessor zur Durchführung der jeweiligen Verfahrensschritte durch ein Computerprogramm geeignet programmiert sein.

Es gibt nun eine Vielzahl von Möglichkeiten, das erfindungsgemäße Verfahren zum Regeln eines selbstgeführten Stromrichters, den erfindungsgemäßen selbstgeführten Stromrichter sowie das erfindungsgemäße System auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1     ein Flussdiagramm eines ersten Ausführungsbeispiels des erfindungsgemäßen Verfahrens,

Fig. 2    ein vereinfachtes Blockschaltbild eines Ausführungsbeispiels eines erfindungsgemäßen Systems,

Fig. 3    ein weiteres vereinfachtes Blockschaltbild eines weiteren Ausführungsbeispiels eines erfindungsgemäßen Systems,

Fig. 4    ein vereinfachtes Ersatzschaltbild eines Ausführungsbeispiels eines Systems gemäß der vorliegenden Erfindung,

Fig. 5    ein Diagramm eines Strom-Spannungsverlaufs eines ersten Ausführungsbeispiels mit zwei Pulswechselrichtern und einem stationären Arbeitspunkt,

Fig. 6    ein weiteres Diagramm eines Strom-Spannungsverlaufs eines weiteren Ausführungsbeispiels mit zwei Pulswechselrichtern und einem Wechsel des Arbeitspunkts, und

Fig. 7    ein weiteres Diagramm eines Strom-Spannungsverlaufs eines weiteren Ausführungsbeispiels mit zwei Pulswechselrichtern und einem unsymmetrischen Arbeitspunkt.

Zunächst ist festgestellt worden, dass es für eine ausreichende Stabilität des Netzes erforderlich ist, dass alle Energieerzeugungsanlagen eine bestimmte Anlagencharakteristik am Anschlusstor realisieren. Soll Energie aus dem Netz bezogen werden, muss das Verhalten eines konstanten Widerstands emuliert werden. Soll Energie in das Netz eingespeist werden, muss eine konstante Leistung am Anschlusstor realisiert werden.

Da es sich um ein AC-Spannungssystem handelt, können die geforderten Anlagencharakteristiken jeweils auf ihr komplexes Äquivalent erweitert werden. Am Anschlusstor kann daher entweder das Verhalten eines konstanten komplexen Widerstands oder das Verhalten einer konstanten komplexen Scheinleistung realisiert werden.

Im Folgenden werden die zuvor genannten Forderungen mathematisch formuliert. Da eine Komponenten-Darstellung komplexer Zahlen algorithmisch die Realisierung mit dem geringsten Rechenaufwand darstellt, wird diese ebenfalls angegeben.

Für ein Verhalten eines konstanten komplexen Widerstands kann von der Gleichung

$$\underline{I}_{soll} = \frac{\underline{U}_{ist}}{\underline{Z}_{soll}} \tag{a}$$

ausgegangen werden. Für die Sollscheinleistung gilt

$$\underline{S}_{soll} = \underline{U}_{nom} \cdot \underline{I}_{nom}^{*} = \frac{\underline{U}_{nom} \cdot \underline{U}_{nom}^{*}}{\underline{Z}_{soll}}. \tag{b}$$

Hierbei sind die mit "nom" bezeichneten Größen die nominellen Größen. Aus den Gleichung (a) und (b) kann der konstante komplexe Widerstand durch die Gleichung

$$\underline{Z}_{soll} = \frac{\underline{U}_{nom} \cdot \underline{U}_{nom}^{*}}{\underline{S}_{soll}^{*}} \tag{c}$$

ausgedrückt werden. Der gesuchte Sollstrom ergibt sich zu

$$\underline{I}_{soll} = \frac{\underline{S}_{soll}^{*}}{\underline{U}_{ist}^{*}} = \frac{\underline{U}_{ist}}{\underline{U}_{ist} \cdot \underline{U}_{ist}^{*}} \cdot \underline{S}_{soll}^{*} = \frac{\underline{U}_{ist}}{\left|\underline{U}_{ist}\right|^{2}} \cdot \underline{S}_{soll}^{*} \tag{d}$$

$$\underline{I}_{soll} = \frac{\underline{U}_{ist,re} + i\underline{U}_{ist,im}}{\left|\underline{U}_{ist}\right|^{2}} \cdot \left(P_{soll} - iQ_{soll}\right). \tag{e}$$

Für ein Verhalten einer konstanten Leistung am Anschlusstor kann von der Gleichung

$$\underline{S}_{soll} = \underline{U}_{ist} \cdot \underline{I}_{soll}^{*} \tag{f}$$

ausgegangen werden. Daraus ergibt sich der konjugiert komplexe Sollstrom

$$\underline{I}_{soll}^{*} = \frac{\underline{S}_{soll}}{\underline{U}_{ist}} . \tag{g}$$

Für den gesuchten Sollstrom gilt daher

$$\underline{I}_{soll} = \frac{\underline{S}_{soll}^{*}}{\underline{U}_{ist}^{*}} = \frac{\underline{U}_{ist}}{\underline{U}_{ist} \cdot \underline{U}_{ist}^{*}} \cdot \underline{S}_{soll}^{*} = \frac{\underline{U}_{ist}}{\left|\underline{U}_{ist}\right|^{2}} \cdot \underline{S}_{soll}^{*} \tag{h}$$

$$\underline{I}_{soll} = \frac{\underline{U}_{ist,re} + i\underline{U}_{ist,im}}{\left|\underline{U}_{ist}\right|^{2}} \cdot \left(P_{soll} - iQ_{soll}\right). \tag{i}$$

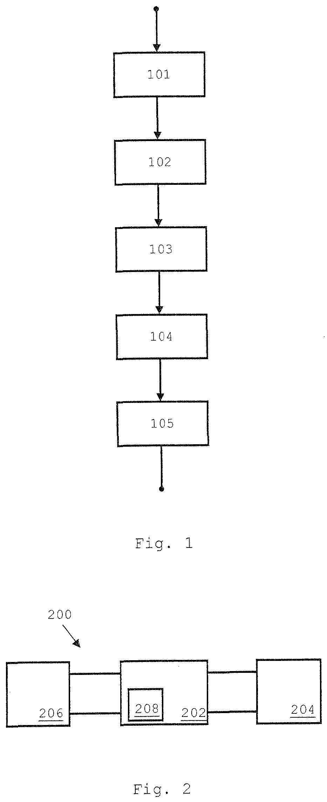

Figur 1 zeigt ein Flussdiagramm eines Ausführungsbeispiels eines Verfahrens zum Regeln von selbstgeführten Stromrichtern gemäß der vorliegenden Erfindung.

In einem ersten Schritt 101 wird mindestens ein aktueller elektrischer Parameter einer Strecke bereitgestellt, wie beispielsweise eine Istspannung und/oder ein Iststrom.

Aus dem mindestens einen elektrischen Parameter wird im nächsten Schritt 102 ein aktueller Zeitparameter der Strecke, beispielsweise die Abtastzeit und/oder die Netzfrequenz, ermittelt.

Ferner wird im Schritt 103 ein vorheriges elektrisches Zeigerstellsignal bereitgestellt.

Das vorherige elektrische Zeigerstellsignal wird um einen Winkel gedreht, wobei der Winkel in Abhängigkeit des ermittelten Zeitparameters bestimmt wird (Schritt 104). Insbesondere kann das vorherige Zeigerstellsignal, wie ein Raumzeiger aus dem letzten Regelungsintervall, um den Winkel weitergedreht werden, um den sich ein (ideales) Drehspannungssystem mit der ermittelten Netzfrequenz innerhalb der Abtastzeit verändert hätte. Es wird also die aktuelle Phasenlage bestimmt und das vorherige Zeigerstellsignal entsprechend gedreht, wobei davon ausgegangen wird, dass das vorherige Zeigerstellsignal ein korrektes Zeigerstellsignal war.

Im Schritt 105 wird der Stromrichter in Abhängigkeit des gedrehten elektrischen Zeigerstellsignals gesteuert bzw. geregelt. Hierbei kann vor einer Steuerung bzw. Regelung eines Stromrichters das gedrehte Zeigerstellsignal einer Korrektur unterzogen werden, wobei dies im nachfolgenden näher ausgeführt wird. Anschließend kann das Verfahren mit Schritt 101 fortgesetzt werden. Figur 2 zeigt ein vereinfachtes Blockschaltbild eines Ausführungsbeispiels eines erfindungsgemäßen Systems 200. Das System 200 umfasst mindestens einen selbstgeführten Stromrichter 202, welcher mit einer Last 204 und einem Netz 206 verbindbar ist. Der Stromrichter 202 umfasst ferner eine Regelschaltung 208, welche zum Regeln des Stromrichters 202 vorgesehen ist. Die Regelschaltung 208 kann neben geeigneten Prozessor- und Speichermitteln auch Sensoren zur Erfassung von elektrischen Parametern der Strecke aufweisen. Nachfolgend wird ein mögliches Ausführungsbeispiel des erfindungsgemäßen Systems im Detail erläutert.

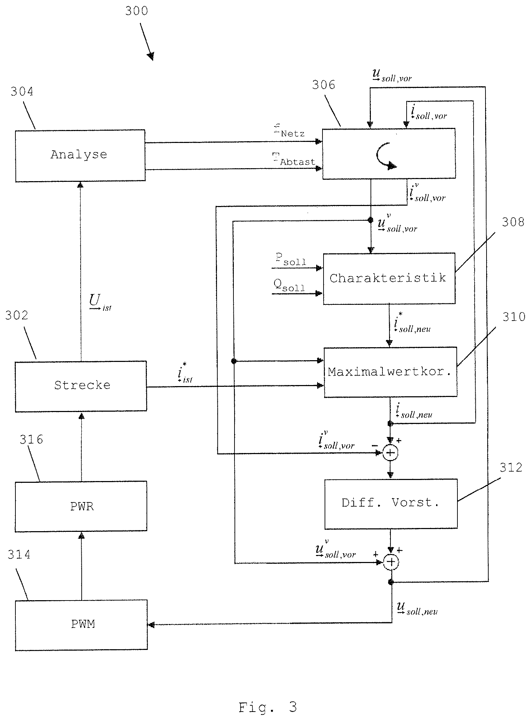

In Figur 3 ist ein vereinfachtes Blockschaltbild eines Ausführungsbeispiels eines erfindungsgemäßen Systems 300 dargestellt.

Das dargestellte System 300 umfasst zunächst eine Strecke 302 bzw. Regelstrecke 302. Die Strecke 302 umfasst insbesondere die Last und/oder das Netz. Beispielsweise kann die Strecke 302 Netzfilter, Stromrichter-Induktivitäten, Transformatoren und Zwischenkreiskapazitäten umfassen.

Mindestens ein elektrischer Parameter der Strecke 302 wird einer ersten Verarbeitungseinrichtung 304 zur Analyse bereitgestellt. Der aktuelle Parameter ist gemäß der im Anspruch 1 definierten Erfindung eine (Ausgangs-) Spannung $\underline{U}_{ist}$ . Diese kann beispielsweise durch einen Sensor gemessen werden. Insbesondere kann die Phasenspannung $\underline{U}_{ist}$ gemessen werden. Beim vorliegenden Ausführungsbeispiel handelt es sich um ein dreiphasiges Beispiel, so dass die aktuelle Spannung durch einen zeitabhängigen, also augenblicklichen Raumzeiger $\underline{U}_{ist}$ dargestellt wird.

Aus dem zeitabhängigen elektrischen Parameter, $\underline{U}_{ist}$ , wird mindestens ein Zeitparameter der Strecke 302 bestimmt. Bei dem Zeitparameter kann es sich insbesondere um die aktuelle Netzfrequenz $f_{Netz}$ oder die aktuelle Abtastzeit $T_{Abtast}$ handeln. Bevorzugt werden beide Zeitparameter $f_{Netz}$ und $T_{Abtast}$ bestimmt. Die beiden Zeitparameter

$f_{Netz}$ und $T_{Abtast}$ können einer Drehoperatoreinrichtung 306 zur Verfügung gestellt werden.

Neben der aktuellen Netzfrequenz $f_{Netz}$ und der aktuellen Abtastzeit $T_{Abtast}$ werden im vorliegenden Ausführungsbeispiel dem Drehoperator 306 auch die Zeigersignale $\underline{u}_{soll,vor}$ und $\underline{i}_{soll,vor}$ bereitgestellt. Beim dem Zeigersignal $\underline{u}_{soll,vor}$ handelt es sich um das vorherige Zeigerstellsignal $\underline{u}_{soll,vor}$, insbesondere einem Spannungszeigerstellsignal $\underline{u}_{soll,vor}$. Unter dem Ausdruck "vorherig" ist hierbei zu verstehen, dass das Zeigerstellsignal im letzten, also im (unmittelbar) vorherigen Regelungsintervall zur Regelung des Stromrichters 316, insbesondere des Pulswechselrichters 316, verwendet wurde. Mit anderen Worten wird vorliegend eine Rückkopplung des Spannungszeigerstellsignals $\underline{u}_{soll,vor}$ durchgeführt.

In entsprechender Weise kann das vorherige zweite Sollzeigersignal $\underline{i}_{soll,vor}$, insbesondere ein zweites Stromsollzeigersignal $\underline{i}_{soll,vor}$ rückgekoppelt werden.

Die Drehoperatoreinrichtung 306 ist dazu konfiguriert, mindestens das vorherige Zeigerstellsignal um einen Winkel, der sich aus dem mindestens einen Zeitparameter ableiten lässt, zu drehen. Insbesondere kann der augenblickliche Raumzeiger der Stromrichterstellspannung $\underline{u}_{soll,vor}$ aus dem letzten Regelungsintervall (genau) um den Winkel weitergedreht werden, um den sich ein (ideales) Drehspannungssystem mit der ermittelten Frequenz $f_{Netz}$ innerhalb der Abtastzeit $T_{Abtast}$ verändert hätte. In entsprechender Weise kann der augenblickliche Raumzeiger des Phasenstrom-Sollwerts $\underline{i}_{soll,vor}$ vorgedreht werden.

Das gedrehte Zeigerstellsignal, insbesondere das vorgedrehte Spannungszeigerstellsignals $\underline{u}_{soll,vor}^{v}$ kann Eingangsgröße einer weiteren Verarbeitungseinrichtung 308 sein. Die weitere Verarbeitungseinrichtung 308 kann insbesondere dazu eingerichtet sein, die geforderte Anlagencharakteristik sicherzustellen. Wie zuvor beschrieben wurde, wird am Anschlusstor vorzugsweise entweder das Verhalten eines konstanten komplexen Widerstands oder einer konstanten komplexen Scheinleistung realisiert.

Aus den Eingangsgrößen, insbesondere einer Sollwirkleistung $P_{soll}$, einer Sollblindleistung $Q_{soll}$ und des gedrehten vorherigen Spannungszeigerstellsignals $\underline{u}_{soll,vor}^{v}$, kann ein entsprechendes erstes Sollzeigersignal, insbesondere ein entsprechendes erstes Stromsollzeigersignal $\underline{i}_{soll,neu}^{*}$, bestimmt werden. Die Sollwerte der Wirk- und Blindleistung $P_{soll}$ und $Q_{soll}$ werden üblicherweise nicht explizit als Sollwerte angeführt, da sich diese aus dem Verhalten der Zwischenkreisspannung und der Last ergeben. Ferner können nominelle Größen bereitgestellt werden.

Um die Leistungssollwerte $P_{soll}$ und $Q_{soll}$ auf einen augenblicklichen Sollwert übertragen zu können, kann der Systemzustand stets augenblicklich als stationär angenommen werden. Insbesondere kann die Tatsache ausgenutzt werden, dass ein Stromraumzeiger augenblicklich für einen gegebenen Spannungsraumzeiger in eine parallele und eine orthogonale Komponente zerlegt werden kann, so dass die stationären Sollwerte in einen augenblicklichen Zusammenhang überführt werden können.

Das erste Stromsollzeigersignal $\underline{i}_{soll,neu}^{*}$ kann einer weiteren Verarbeitungseinrichtung 310 zur Maximalwertkorrektur zur Verfügung gestellt werden. Die optionale Maximalwertkorrektur kann dazu dienen, dass auslegungsspezifische Beschränkungen eingehalten werden können. Zur Maximalwertkorrektur kann insbesondere der augenblickliche Strom $\underline{i}_{ist}^{*}$ bereitgestellt, insbesondere gemessen werden. Dieser kann für eine Maximalwertkorrektur bewertet werden. Im Ergebnis liegt als Ausgangssignal im vorliegenden Ausführungsbeispiel ein zweites Sollzeigersignal vor, insbesondere ein zweites Stromsollzeigersignal $\underline{i}_{soll,neu}$, welcher dem zu realisierenden Stromsollwert entspricht.

Anschließend kann das neue Stromsollzeigersignal $\underline{i}_{soll,neu}$ mit dem gedrehten vorherigen Stromsollzeigersignal $\underline{i}_{soll,vor}^{v}$, insbesondere mit dem negativen Wert von $\underline{i}_{soll,vor}^{v}$, summiert werden.

Um vorteilhafterweise ein frequenzneutrales Verhalten der vorliegenden augenblicklichen Realisierung des Drehspannungssystems zu erreichen, kann eine weitere Verarbeitungseinrichtung 312 zur differenziellen Vorsteuerung eingesetzt werden. Hierdurch kann erreicht werden, dass langsame in den Verteil- und Verbundnetzen integrierte Frequenzstatiken nicht beeinflusst werden. Alternativ zur differenziellen Vorsteuerung kann auch ein differenzieller Regler vorgesehen sein, um eine höhere Robustheit zu erzielen.

Zu dem von der differenziellen Vorsteuerung 312 erzeugten Ausgangsspannungs-Raumzeiger kann der vor-

gedrehte Spannungs-Raumzeiger $\underset{\rightarrow}{u}{}_{soll,vor}^{v}$ addiert werden. Das resultierende Spannungszeigerstellsignal $\underset{\rightarrow}{u}{}_{soll,neu}$ kann an einen Pulsgenerator 314, insbesondere einem Pulsweitenmodulator (PWM) übertragen werden.

Die nichtidealen Schalteigenschaften der leistungselektronischen Elemente, wie stromabhängige Einschalt- und Ausschaltzeiten, stromabhängige Spannungsfälle und dergleichen, können durch eine optionale Stromrichterkorrektur kompensiert werden.

Die resultierenden Schaltzeiten und -wörter werden an einen Aktor 316 übergeben. Für den speziellen Fall eines dreiphasigen Netzumrichters 316 kann es sich dabei um einen Pulswechselrichter 316 handeln. Dieser führt die Schaltungen aus, die wiederum auf die Regelstrecke 302 wirken.

Die Regelung des Stromrichters 316 wird erfindungsgemäß (ausschließlich) mit augenblicklichen, also zeitabhängigen Größen durchgeführt. Eine augenblickliche Regelung kann in einfacher Weise bereitgestellt werden.

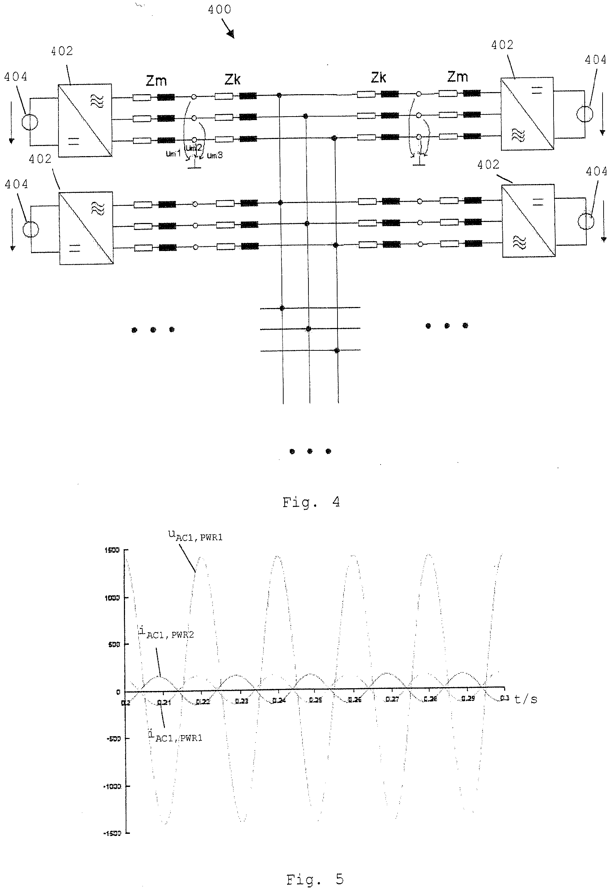

Figur 4 zeigt ein vereinfachtes Ersatzschaltbild eines Ausführungsbeispiels eines Systems 400 gemäß der vorliegenden Erfindung. Das in Figur 4 gezeigte System 400 kann insbesondere zur Untersuchung eines Ausführungsbeispiels des vorliegenden Verfahrens genutzt werden.

Das System 400 weist mehrere auf der AC-Seite verbundene Pulswechselrichter 402 auf. Auf der AC-Seite ist an jeden Pulswechselrichter 402 eine ohmsch-induktive Impedanz $Z_m$ angeschlossen, über die die Netzspannungsmessung des Regelungskonzepts des vorliegenden Ausführungsbeispiels gemäß der vorliegenden Erfindung erfolgen kann. Ohne diese Impedanz könnte nur die Spannung direkt am Pulswechselrichter 402 gemessen werden und die Information zur Netzspannung würde der Regelung fehlen.

Hinter der Messimpedanz $Z_m$ folgt eine ebenfalls als ohmsch-induktiv angenommene Leitungsimpedanz $Z_k$. Die einzelnen Leitungsimpedanzen $Z_k$ sind netzseitig zu einem induktiven Sternpunkt verbunden.

Auf der DC-Seite des Pulswechselrichters 402 ist jeweils eine konstante Spannungsquelle 404 angeordnet. Grund hierfür ist, dass die Realisierung eines idealen Drehspannungssystems avisiert wird und daher die Änderungen der Zwischenkreisspannungen nicht relevant sind. In der Realität würde eine Abweichung vom Sollwert der Zwischenkreisspannung einen veränderten Wirkleistungssollwert zur Folge haben.

Die Simulation wird im intervallbasierten Modus ausgeführt.

Mit anderen Worten werden die einzelnen Schaltungen der Halbleiterventile vernachlässigt. Stattdessen wird die Aussteuerung und damit die AC-Spannung jedes Strangs der Stromrichter 402 über ein Regelungsintervall konstant gehalten. Für das Grundschwingungsverhalten des Systems 400 hat diese Vereinfachung keine Auswirkungen.

Die Abtastzeiten der Regelungen werden für alle Stromrichter 402 in allen Konfigurationen konstant auf $T_{Abtast}$ = 100 μs gesetzt. Die ohmsch-induktiven Impedanzen im vorliegenden Beispiel alle zu L = 10 mH und R = 100 μΩ angenommen. Hierbei sind für Mess- und Leitungsimpedanz $Z_m$ und $Z_k$ die gleichen Parameter gewählt worden.

Dies ist für die im vorliegenden Ausführungsbeispiel verwendete erfindungsgemäße Regelungsstruktur eine extrem fordernde Anbindung, da die relative Kurzschlussleistung aufgrund des großen Spannungsabfalls sehr gering ist. Diese unrealistische Konfiguration ist bewusst ausgewählt worden, um ein zufälliges bzw. grenzwertiges korrektes Verhalten der Regelung ausschließen zu können. Bei solch extremen Bedingungen geht es nicht um die Parametrierung, sondern um Prinzipien und Struktur.

Die Nennspannung beträgt $U_N$ = 1000 V, die Strombegrenzung beträgt $I_{max}$ = 400 A. Um das grundsätzliche Verhalten besonders klar aufzeigen zu können, werden in den folgenden Ausführungsbeispielen lediglich zwei Pulswechselrichter 402 aktiviert.

Die Sollwerte für die Scheinleistung werden zu $P_{soll,1}$ = 300 kW und $Q_{soll,1}$ = -120 kVA und $P_{soll,2}$ = -$P_{soll,1}$ bzw. $Q_{soll,2}$ = -$Q_{soll,1}$ angenommen. In diesem ersten Ausführungsbeispiel wurde folglich ein Arbeitspunkt gewählt, in dem die Sollwerte der eingespeisten und der abgenommenen Scheinleistung einander entsprechen. Mit anderen Worten ist ein sinnvoller Arbeitspunkt gewählt worden.

In der Figur 5 ist der Verlauf der Ströme $i_{AC1,PWR1}$, $i_{AC1,PWR1}$ und der Spannung $u_{AC1,PWR1}$ über der Zeit dargestellt. Wie der Figur 5 zu entnehmen ist, wird der Arbeitspunkt von dem erfindungsgemäßen Regelungsansatz auch einwandfrei eingestellt. Für die Scheinleistung ergeben sich die Werte $P_{ist,1}$ = 301,14 kW und $Q_{ist,1}$ = -117,4 kVA bzw. $P_{ist,2}$ = -303 1 kW und $Q_{ist,1}$ = 113 kVA.

Die Differenz der Istwerte zu den Sollwerten liegt im tolerierbaren Bereich. Darüber hinaus ist die Differenz zwischen der Scheinleistung des ersten zur Scheinleistung des zweiten Pulswechselrichters notwendig, da zwar die Torleistungen der Anlagen zu einander passen, jedoch zusätzlich Blindleistung für die Leitungsimpedanz aufgebracht werden muss.

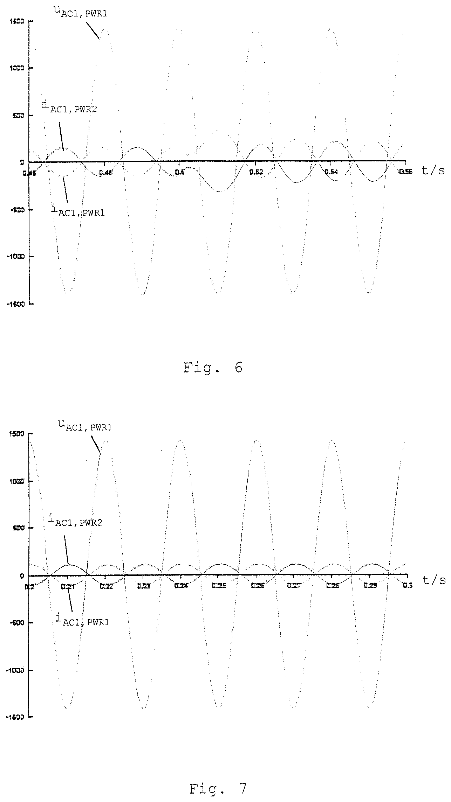

Im nächsten Ausführungsbeispiel erfolgt bei t = 0,5 s ein Wechsel des Arbeitspunkts auf $P_{soll,1}$ = -$P_{soll,2}$ = -420 KW und $Q_{soll,1}$ = -$Q_{soll,2}$ = -192 KVA. Der entsprechende Verlauf der Ströme $i_{AC1,PWR1}$, $i_{AC1,PWR1}$ und der Spannung $u_{AC1,PWR1}$ ist in Figur 6 dargestellt. Wie aus der Figur 6 zu erkennen ist, erfolgt der Wechsel des Arbeitspunkts trotz des nicht vorhandenen Reglers ohne großes Überschwingen innerhalb von zwei Perioden. Die Sollwerte werden mit einer Güte erreicht, welche mit der Güte des ersten Ausführungsbeispiels vergleichbar ist.

Es sei an dieser Stelle angemerkt, dass auch bei Versuchen mit drei oder mehr Stromrichtern 402 sowohl bei einem stationären Arbeitspunkt als auch bei einem Wechsel des Arbeitspunkts gute Ergebnisse erzielt worden sind.

Um das Potential des vorliegenden Regelungsansatzes aufzuzeigen, können beispielsweise fünf Pulswechselrichter 402 an dem induktiven Sternpunkt aktiviert werden. Die Sollwerte werden zu $P_{soll,1}$ = 300 kW, $P_{soll,2}$ = -100 kW, $P_{soll,3}$ = -80 kW, $P_{soll,4}$ = 40 kW und $P_{soll,5}$ = -160 kW bzw. $Q_{soll,1}$ = -120 kVA, $Q_{soll,2}$ = 50 kVA, $Q_{soll,3}$ = 30 kVA, $Q_{soll,4}$ = 40 kVA und $Q_{soll,5}$ = 0 kVA gewählt. Auch in diesem Szenario ergibt sich eine gute Sollwertfolge und ein Arbeitspunktwechsel innerhalb von zwei Perioden. Wie im vorherigen Szenario wurden beim Wechsel des Arbeitspunkts alle Sollwerte mit Pneu = -1, 4 · $P_{alt}$ und Qneu = 1, 6 · $Q_{alt}$ multipliziert.

Die Reaktion des Systems 400 auf nicht passende Sollwerte für die Scheinleistung wird nachfolgend an einem weiteren Ausführungsbeispiel mit zwei Pulswechselrichtern 402 überprüft. Dafür werden die Sollwerte $P_{soll,1}$ = 300 kW, $P_{soll,2}$ = -150 kW, $Q_{soll,1}$ = 100 kVA und $Q_{soll,2}$ = 0 kVA eingestellt.

Der resultierende Verlauf der Ströme $i_{AC1,PWR1}$, $i_{AC1,PWR1}$ und der Spannung $u_{AC1,PWR1}$ ist in Figur 7 dargestellt. Es ergeben sich die Arbeitspunkte $P_{ist,1}$ = 223,57 kW, $P_{ist,2}$ = -222 kW, $Q_{ist,1}$ = 51,25 kVA und $Q_{ist,2}$ = -52,89 kVA.

Das vorliegende erfindungsgemäße Verfahren zum Regeln von Stromrichtern korrigiert mit den beiden Charakteristiken konstante Leistung und konstanter Widerstand die Arbeitspunkte der Pulswechselrichter derart, dass beide Pulswechselrichter die gleiche Abweichung vom Sollwert aufweisen und somit alle Teilnehmer den gleichen Beitrag zur Stabilisierung des Systems, also des Netzes, leisten.

Tests haben gezeigt, dass auch mit mehr als zwei Pulswechselrichtern das System mit einem nächstmöglichen Arbeitspunkt für jeden Pulswechselrichter reagiert. Beispielsweise reagiert das System 400 auch mit fünf Pulswechselrichtern 402 mit einem nächstmöglichen Arbeitspunkt für jeden Pulswechselrichter 402. In diesem Beispiel ergibt sich mit den Sollwerten $P_{soll,1}$ = 300 kW, $P_{soll,2}$ = -100 kW, $P_{soll,3}$ = -80 kW, $P_{soll,4}$ = 100 kW und $P_{soll,5}$ = -80 kW eine Differenz von $\Delta P$ = 140 kW zwischen abgenommener und eingespeister Sollwirkleistung. Bei der Blindleistung ergibt sich mit $Q_{soll,1}$ = -150 kVA, $Q_{soll,2}$ = 120 kVA, $Q_{soll,3}$ = 30 kVA, $Q_{soll},4$ = 90 kVA und $Q_{soll,5}$ = 0 kVA eine Differenz von $\Delta Q$ = 90 kVA.

Bei einer Simulation ergeben sich die Arbeitspunkte $P_{ist,1}$ = 275,6 kW, $P_{ist,2}$ = -130,45 kW, $P_{ist,3}$ = -107, 9 kW, $P_{ist,4}$ = 70,8 kW und $P_{ist,5}$ = -107,2 kW. Bei einer Differenz von $\Delta P_{PWR} = \dfrac{140kW}{5} = 28kW$ ergibt sich ein erwarteter Verlauf, da die Wirkleistung jedes Pulswechselrichters 402 jeweils um etwa 28 kW niedriger ist als im Sollwert angegeben. Die Abweichung von diesem Wert ist in den Kabel- und den Messimpedanzen begründet. Die Blindleistungen ergeben sich zu $Q_{ist,1}$ = -163, 6 kVA, $Q_{ist,2}$ = 101, 2 kVA, $Q_{ist,3}$ = 10, 96 kVA, $Q_{ist,4}$ = 73, 1 kVA und $Q_{ist,5}$ = -18, 9 kVA. Mit einer Differenz pro Pulswechselrichter 402 von $\Delta Q_{PWR} = \dfrac{90kW}{5} = 18kW$ ergibt sich auch hier ein sinnvoller Arbeitspunkt des Systems 400.

Die vorliegenden Ausführungsbeispiele mit zwei Pulswechselrichtern zeigen, dass ein stationärer und ein dynamischer Betrieb für sinnvolle Arbeitspunkte mit ausgeglichener Scheinleistungsbilanz erzielt werden können. Die Untersuchungen im Zeitbereich zeigen insbesondere, dass auch unausgeglichene Sollwert-Szenarien beherrscht sind. Ohne eine Kommunikation kann ein sinnvoller Arbeitspunkt zwischen den autonomen, mit dem Netz verbundenen leistungselektronischen Anlagen realisiert werden.

**Patentansprüche**

**1.** Verfahren zum Regeln eines selbstgeführten dreiphasigen Stromrichters (202, 316, 402), wobei zumindest ein aktueller zeitabhängiger elektrischer Parameter einer Strecke (302) bereitgestellt wird, wobei der bereitgestellte Parameter eine Ausgangs-Spannung in Form eines augenblicklichen Raumzeigers $\underrightarrow{U}_{ist}$ ist,
**dadurch gekennzeichnet, dass**

- mindestens ein aktueller Zeitparameter der Strecke (302) aus dem aktuellen zeitabhängigen elektrischen Parameter ermittelt wird,
- mindestens ein vorheriges Zeigerstellsignal bereitgestellt wird, wobei das vorherige Zeigerstellsignal in einem vorherigen Stellintervall bestimmt wurde,
- das vorherige Zeigerstellsignal um einen Winkel gedreht wird, wobei der Winkel in Abhängigkeit des ermittelten aktuellen Zeitparameters bestimmt wird, und
- der Stromrichter (202, 316, 402) in Abhängigkeit des gedrehten Zeigerstellsignals geregelt wird.

**2.** Verfahren nach Anspruch 1, **dadurch gekennzeichnet, dass** der mindestens eine aktuelle Zeitparameter eine aktuelle Netzfrequenz der Strecke (302) und/oder eine aktuelle Abtastzeit der Strecke (302) ist, wobei der bestimmte Winkel im Wesentlichen dem Winkel entspricht, um den sich das vorherige Zeigerstellsignal vom vorherigen Stellzeitpunkt zum aktuellen Stellzeitpunkt mit der aktuellen Netzfrequenz und/oder der aktuellen Abtastzeit in einem idealen Drehnetz gedreht hat.

3. Verfahren nach Anspruch 1 oder 2, **dadurch gekennzeichnet, dass**

- als aktueller zeitabhängiger elektrischer Parameter die aktuelle zeitabhängige Spannung der Strecke (302), insbesondere ein augenblicklicher Spannungsraumzeiger, bestimmt wird,
und/oder
- als aktueller zeitabhängiger elektrischer Parameter der aktuelle zeitabhängige Strom der Strecke (302) bestimmt wird.

4. Verfahren nach einem der vorherigen Ansprüche, **dadurch gekennzeichnet, dass** aus dem gedrehten Zeigerstellsignal ein aktuelles Zeigerstellsignal ermittelt wird, wobei das aktuelle Zeigerstellsignal zumindest in Abhängigkeit des gedrehten Zeigerstellsignals und mindestens einem Sollparameter zur Realisierung einer bestimmten Anlagencharakteristik ermittelt wird.

5. Verfahren nach Anspruch 4, **dadurch gekennzeichnet, dass**

- der mindestens eine Sollparameter eine Sollscheinleistung ist,
- ein erstes Sollzeigersignal aus dem gedrehten Zeigerstellsignal und der Sollscheinleistung ermittelt wird, und
- insbesondere aus dem aktuellen Strom der Strecke (302) und mindestens dem ersten Sollzeigersignal durch eine Maximalwertkorrektur ein zweites Sollzeigersignal ermittelt wird.

6. Verfahren nach Anspruch 5, **dadurch gekennzeichnet, dass**

- ein vorheriges erstes Sollzeigersignal oder ein vorheriges zweites Sollzeigersignal bereitgestellt wird,
- das vorherige erste Sollzeigersignal und/oder das vorherige zweite Sollzeigersignal um einen Winkel gedreht wird, wobei der Winkel in Abhängigkeit des ermittelten aktuellen Zeitparameters bestimmt wird, und
- das gedrehte Sollzeigersignal und das erste Sollzeigersignal summiert werden, und/oder
- das gedrehte Sollzeigersignal und das zweite Sollzeigersignal summiert werden.

7. Verfahren nach Anspruch 6, **dadurch gekennzeichnet, dass**

- das summierte Sollzeigersignal ein Stromsollzeigersignal ist, und
- aus dem Stromsollzeigersignal als aktuelles Zeigerstellsignal ein aktuelles Spannungszeigerstellsignal durch eine differentielle Vorsteuerung ermittelt wird.

8. Verfahren nach Anspruch 7, **dadurch gekennzeichnet, dass** das aktuelle Spannungszeigerstellsignal und das gedrehte Spannungszeigerstellsignal summiert werden.

9. Selbstgeführter dreiphasiger Stromrichter (200, 316, 402), welcher nach dem Verfahren gemäß einem der vorherigen Ansprüche geregelt wird, mit einer Regelschaltung (208) zum Bestimmen von mindestens einem aktuellen zeitabhängigen elektrischen Parameter einer Strecke (302),
**dadurch gekennzeichnet, dass**

- die Regelschaltung (208) eine Verarbeitungseinrichtung (304) zum Ermitteln von mindestens einem aktuellen Zeitparameter aus dem aktuellen zeitabhängigen elektrischen Parameter aufweist,
- wobei mindestens ein vorheriges Zeigerstellsignal bereitgestellt wird, wobei das vorherige Zeigerstellsignal in einem vorherigen Stellintervall bestimmt wurde,
- die Regelschaltung (208) eine Drehoperatoreinrichtung (306) zum Drehen des vorherigen Zeigerstellsignals um einen Winkel aufweist, wobei der Winkel in Abhängigkeit des ermittelten aktuellen Zeitparameters bestimmbar ist, und
- die Regelschaltung (208) zum Regeln des Stromrichters (202, 316, 402) in Abhängigkeit des gedrehten Zeigerstellsignals vorgesehen ist.

10. System (200, 300, 400) mit einem selbstgeführten Stromrichter (202, 316, 402) gemäß Anspruch 9, wobei der selbstgeführte Stromrichter (202, 316, 402) mit einer Last (204) und einem Netz (206) verbunden ist.

**Claims**

1.  Method for controlling a self-guided three-phase power converter (202, 316, 402), wherein at least one current time-dependent electrical parameter of a circuit (302) is provided, wherein the provided parameter is an output voltage in the form of an instantaneous space vector $\underline{U}_{ist}$ ,
    **characterized in that**

    - at least one current time parameter of the circuit (302) is determined from the current time-dependent electrical parameter,
    - at least one previous vector setting signal is provided, wherein the previous vector setting signal was determined in a previous setting interval,
    - the previous phase control signal is rotated by an angle, wherein the angle is determined as a function of the determined current time parameter, and
    - the current converter (202, 316, 402) is controlled as a function of the rotated phase control signal.

2.  Method according to claim 1, **characterized in that** the at least one current time parameter is a current grid frequency of the system (302) and/or a current sampling time of the circuit (302), wherein the determined angle essentially corresponds to the angle by which the previous phasor setting signal has rotated from the previous setting time point to the current setting time point with the current grid frequency and/or the current sampling time in an ideal rotating grid.

3.  Method according to claim 1 or 2, **characterized in that**

    - the current time-dependent voltage of the circuit (302), in particular an instantaneous voltage space phasor, is determined as the current time-dependent electrical parameter,
    and/or
    - the current time-dependent current of the circuit (302) is determined as the current time-dependent electrical parameter.

4.  Method according to one of the previous claims, **characterized in that** a current phasor setting signal is determined from the rotated phasor setting signal, wherein the current phasor setting signal is determined at least as a function of the rotated phasor setting signal and at least one setpoint parameter for realizing a specific system characteristic.

5.  Method according to claim 4, **characterized in that**

    - the at least one setpoint parameter is a setpoint apparent power,
    - a first setpoint phasor signal is determined from the rotated phasor setting signal and the setpoint apparent power, and
    - in particular, a second setpoint phasor signal is determined from the current current of the circuit (302) and at least the first setpoint phasor signal by means of a maximum value correction.

6.  Method according to claim 5, **characterized in that**

    - a previous first setpoint phasor signal or a previous second setpoint phasor signal is provided,
    - the previous first setpoint phasor signal and/or the previous second setpoint phasor signal is rotated by an angle, wherein the angle is determined as a function of the determined current time parameter, and
    - the rotated setpoint phasor signal and the first setpoint phasor signal are summed, and/or
    - the rotated setpoint phasor signal and the second setpoint phasor signal are summed.

7.  Method according to claim 6, **characterized in that**

    - the summed setpoint phasor signal is a current setpoint phasor signal, and
    - a current voltage phasor control signal is determined from the current current phasor signal as the current phasor control signal by means of a differential feedforward control.

8.  Method according to claim 7, **characterized in that** the current voltage phasor control signal and the rotated voltage phasor control signal are summed.

9. Self-controlled three-phase current converter (200, 316, 402) which is controlled according to the method according to one of the previous claims, with a control circuit (208) for determining at least one current time-dependent electrical parameter of a circuit (302),
   **characterized in that**

   - the control circuit (208) comprises a processing device (304) for determining at least one current time parameter from the current time-dependent electrical parameter,
   - wherein at least one previous vector setting signal is provided, wherein the previous vector setting signal was determined in a previous setting interval,
   - the control circuit (208) comprises a rotation operator device (306) for rotating the previous phasor setting signal by an angle, wherein the angle is determinable as a function of the determined current time parameter, and
   - the control circuit (208) is provided for controlling the current converter (202, 316, 402) as a function of the rotated phase control signal.

10. System (200, 300, 400) with a self-controlled current converter (202, 316, 402) according to claim 9, wherein the self-controlled current converter (202, 316, 402) is connected to a load (204) and a network (206).

**Revendications**

1. Méthode de régulation d'un convertisseur triphasé autoguidé (202, 316, 402), où au moins un paramètre électrique actuel dépendant du temps d'une section (302) est fourni, où le paramètre fourni est une tension de sortie sous la forme d'un indicateur spatial instantané,
   **caractérisé en ce que**

   - au moins un paramètre temporel actuel de la section (302) est déterminé à partir du paramètre électrique actuel dépendant du temps,
   - au moins un signal de réglage de pointe précédent est fourni, où le signal de réglage de pointe précédent a été déterminé dans un intervalle de réglage précédent,
   - le signal de réglage de pointe précédent est tourné d'un angle, où l'angle est déterminé en fonction du paramètre temporel actuel déterminé, et
   - le convertisseur de courant (202, 316, 402) est régulé en fonction du signal de réglage de pointe.

2. Méthode selon la revendication 1, **caractérisé en ce que** le au moins un paramètre de temps actuel est une fréquence de réseau actuelle de la section (302) et/ou un temps d'échantillonnage actuel de la section (302), où l'angle déterminé correspond essentiellement à l'angle dont le signal de réglage de pointe précédent s'est déplacé entre le moment de réglage précédent et le moment de réglage actuel avec la fréquence de réseau actuelle et/ou le temps d'échantillonnage actuel dans un réseau rotatif idéal.

3. Méthode selon la revendication 1 ou 2, caractérisé en ce

   - la tension actuelle dépendante du temps de la section (302), en particulier un indicateur instantané de tension dans l'espace, est déterminée comme paramètre électrique actuel dépendant du temps,
   et/ou
   - le courant actuel dépendant du temps de la section (302) est déterminé comme paramètre électrique actuel dépendant du temps.

4. Méthode selon l'une des revendications précédentes, **caractérisé en ce que** le signal de réglage de pointe actuel est déterminé à partir du signal de pointe, où le signal de réglage de pointe actuel étant déterminé au moins en fonction du signal de réglage de pointe tourné et d'au moins un paramètre de consigne pour réaliser une caractéristique déterminée de l'installation.

5. Méthode selon la revendication 4, **caractérisé en ce que**

   - le au moins un paramètre de consigne est une puissance apparente de consigne,
   - un premier signal de pointe de consigne est déterminé à partir du signal de pointe tourné et de la puissance apparente de consigne, et
   - un deuxième signal de pointe de consigne est déterminé en particulier à partir du courant actuel de la section (302) et au moins du premier signal de pointe de consigne par une correction de la valeur maximale.

**6.** Méthode selon la revendication 5, **caractérisé en ce que**

- un premier signal de consigne de pointe précédent ou un deuxième signal de consigne de pointe précédent est fourni,
- le premier signal de consigne de pointe précédent et/ou le deuxième signal de consigne de pointe précédent est tourné d'un angle, où l'angle est déterminé en fonction du paramètre de temps actuel déterminé, et
- le signal de consigne de pointe pivoté et le premier signal de consigne de pointe sont additionnés, et/ou
- le signal de consigne de pointe pivoté et le deuxième signal de consigne de pointe sont additionnés.

**7.** Méthode selon la revendication 6, **caractérisé en ce que**

- le signal de consigne de pointe additionné est un signal de consigne de pointe de courant, et
- à partir du signal de consigne de pointe de courant, un signal de consigne de pointe de tension actuel est déterminé comme signal de pointe actuel par une commande différentielle.

**8.** Méthode selon la revendication 7, **caractérisé en ce que** le signal de consigne de pointe de tension actuel et le signal de consigne de pointe de tension tourné sont additionnés.

**9.** Convertisseur triphasé autoguidé (200, 316, 402) qui est régulé selon la méthode selon l'une des revendications précédentes, avec un circuit de régulation (208) pour déterminer au moins un paramètre électrique actuel dépendant du temps d'un section (302),
**caractérisé en ce que**

- le circuit de régulation (208) comprend un dispositif de traitement (304) pour déterminer au moins un paramètre temporel actuel à partir du paramètre électrique actuel dépendant du temps,
- où au moins un signal de réglage de pointe précédent est fourni, le signal de réglage de pointe précédent a été déterminé dans un intervalle de réglage précédent,
- le circuit de régulation (208) comprend un dispositif opérateur rotatif (306) pour faire tourner le signal de réglage de pointe précédent d'un angle, où l'angle est déterminable en fonction du paramètre temporel actuel déterminé, et
- le circuit de régulation (208) est prévu pour réguler le convertisseur de courant (202, 316, 402) en fonction du signal de réglage de pointe tourné.

**10.** Système (200, 300, 400) avec un convertisseur de courant autoguidé (202, 316, 402) selon la revendication 9, où le convertisseur de courant autoguidé (202, 316, 402) est relié à une charge (204) et à un réseau (206).

Fig. 1

Fig. 2

Fig. 3

Fig. 4

Fig. 5

Fig. 6

Fig. 7

# EP 2 639 955 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1691463 A1

- WO 9111847 A1

**In der Beschreibung aufgeführte Nicht-Patentliteratur**

- Control strategy for virtual synchronous generator in microgrid. **YANG XIANG-ZHEN et al.** ELECTRIC UTILITY DEREGULATION AND RESTRUCTURING AND POWER TECHNOLOGIES (DRPT), 2011 4TH INTERNATIONAL CONFERENCE. IEEE, 06 July 2011, 1633-1637

- Optimum Space Vector Computation Technique for Direct Power Control. **JOSE A RESTREPO et al.** IEEE TRANSACTIONS ON POWER ELECTRONICS. INSTITUTE OF ELECTRICAL AND ELECTRONICS ENGINEERS, 01 June 2009, vol. 24, 1637-1645